# EUROPEAN PATENT SPECIFICATION

(11) **EP 2 328 427 B1**
(45) Date of publication and mention of the grant of the patent: **10.04.2013**
(21) Application number: 09782639.0
(22) Date of filing: 04.09.2009
(51) Int. Cl.: A23L 1/31, A23L 1/314, A23L 1/315, A23L 1/317

(54) **OIL COMPOSITION FOR THE PREPARATION OF OIL CONTAINING FOOD PRODUCTS**
ÖLZUSAMMENSETZUNG ZUR HERSTELLUNG VON ÖL ENTHALTENDEN NAHRUNGSMITTELN
COMPOSITION D'HUILE POUR LA PRÉPARATION DE PRODUITS ALIMENTAIRES CONTENANT DE L'HUILE

(30) Priority: 05.09.2008 EP 08163774
(43) Date of publication of application: 08.06.2011
(73) Proprietor: Creta Farm Societe Anonyme Industrial And Commercial, 74100 Rethymnon (GR)
(72) Inventor: DOMAZAKIS, Emmanouil, GR-74100 Rethymnon (GR)
(74) Representative: Hess, Peter K. G.
(86) International application number: PCT/EP2009/061493
(87) International publication number: WO 2010/026231

(56) References cited:
- WO-A-98/04151
- WO-A-02/065860
- US-A1- 2006 292 286

## Description

The present invention relates to an oil composition, comprising oil and broth, a method for its preparation, and its use for the preparation of oil containing meat-based products as well as oil containing emulsion-type foodstuff products. Moreover, the present invention relates to a method for the production of oil containing meat-based products using said oil composition and to the oil containing meat-based products resulting therefrom.

Food products, and in particular meat-based products containing an edible oil, in particular an edible vegetable oil, in substitution of animal fat are desirable from a diet/health point of view as they have a lower cholesterol content and a higher ratio of unsaturated to saturated fatty acids. Basically, such meat-based products are prepared according to two different methodologies, namely methods based on the direct incorporation of the oil and methods based on the indirect incorporation of the oil.

According to the methods that are based on the direct incorporation of the oil, a quantity of pure untreated oil is directly introduced into the meat or meat mass used for the preparation of the desired meat-based products. However, in order to guarantee the stable incorporation of the oil into the meat-based products, different critical process parameters have to be strictly attended during the preparation of the meat-based products (see. e.g. European Patent No. 1361804). Moreover, in many cases, the use of processing aids, such as soya protein and milk proteins, is necessary in order to avoid the occurrence of oil exudation from the end products.

A sliceable coldcut meat product is known from US 2006/0292286 A1, which is produced by curing raw chicken, pre-cooked pancetta, flank steak, pork loin and sharp provolone in a food professor and then mixing with salt, pepper, beef base concentrate, crushed garlic, olive oil, onion powder, garlic powder, sage powder and corn starch. The mixture is then Placed into a stainless steel container, pressed, cooked for a given time and then cooled to form a unitary product.

In the methods that are based on the indirect incorporation of the oil, the oil used for the preparation of the meat-based products is firstly subjected to a pre-ernulsification process where it is pre-emulsifed with water and emulsifying agents. This pre-emulsified oil is then introduced into the meat or meat mass used for the preparation of the desired meat-based products (see e.g. J.G. Bloukas and E.D. Paneras, Journal of Food Sciences, Volume 58, No. 4, 1993, p. 705-709; E.D. Paneras and J.G. Bloukas, Journal of Food sciences, Volume 59, No. 4, 1994, p. 725-733; US-A-005238701). The applied emulsifying temperature used for pre-emulsifying the oil with water and emulsifying agents which is commonly in the range of from 80-120 °C may, however, affect the organoleptic properties of the meat-based products.

An object of the present invention is therefore the provision of a novel methodology for preparing oil containing food products, and in particular oil containing meat-based products, that enables a stable oil incorporation into the food products, even without the use of processing aids, and superior organoleptic properties of the end products.

This object is solved by an oil composition according to claims 1 to 4, a method for the preparation of said oil composition as set forth in claim 5, and the use of said oil composition for the preparation of oil containing foodstuff products, in particular meat-based products according to claims 6 to 17.

Thus, according to a first aspect, the present invention relates to an oil composition, comprising oil and broth. The ratio of oil to broth ranges from 1:1 to 1:3. In particular, the oil to broth ratio of the oil composition of the invention is in the range of from 1:1 to 1:2.5, more preferably from 1:1 to 1:2 and most preferably from 1:1 to 1:1.5. Within the context of the present invention, an oil to broth ratio ranging from 3:1 to 1:3 is, however, also possible.

The oil composition of the present invention allows the stable incorporation of edible oils into foodstuff products, like meat-based products, mayonnaise-type products or salad dressings, in the maximum technologically feasible quantity, with the organoleptic, dietetic and nutritional parameters of the oil being almost unchanged. In particular, the oil composition of the invention is stably incorporated into the meat mass of cooked sausages, fermented dry or semi-dried sausages, pastries, pâté, fresh (raw) sausages and coarsely comminuted (or minced) meat-based product or the meat pieces of cooked whole muscular tissue-based products, dry (fermented) whole muscular tissue-based products (equivalent to raw (fermented) whole muscular tissue-based products) and fresh (raw) whole muscular tissue-based products, essentially without the occurrence of oil exudation due to phase separation.

Within the context of the present invention, the term "oil" comprises any edible oil fit for human consumption. Preferably, the oil contained in the oil composition of the present invention is an edible vegetable oil, edible animal oil or mixtures thereof. From a dietary point of view, edible vegetable oils are, however, more preferred. Some of the many different kinds of edible vegetable oils, that can be used according to the present invention, include: olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil and mixtures thereof. Many other kinds of vegetable oils that are used for cooking can, however, also be contained in the oil composition of the present invention. From the oils mentioned above, olive oil, sunflower oil, corn oil, rape oil and mixtures thereof are especially preferred, with olive oil being the most preferred oil. Moreover, it is preferred that the oil used in the oil composition of the present invention is an organic oil.

The term "broth", as used according to the present invention, encompasses any broth fit for human consumption. Some of the many different kinds of broths, that may be contained in the oil composition of the present invention, include: beef broth, pork broth, chicken broth, veal broth, lamb broth, canard broth, goose broth, vegetable broth and mixtures thereof. However, many other broths made by other edible species fit for human consumption may also be contained in the oil composition of the present invention. Preferably, the broth of the oil composition according to the present invention is beef broth, pork broth, chicken broth, vegetable broth or mixtures thereof. According to a preferred embodiment of the present invention, the broth has a reduced fat content. In particular, the fat content of the broth is equal to or less than 5 wt.%, preferably equal to or less than 3 wt.%, more preferably equal to or less than 2 wt% and most preferably equal to or less than 1 wt.%.

The broth contained in the oil composition of the present invention can be prepared according to methods well known in the art. An exemplary method for the preparation of a meat broth is the following: Carcass items, e.g. from beef, pork, chicken, veal, lamb, canard, goose or any other animal species fit for human consumption, consisting of long bones with attached striated muscle (with the exception of beef long bones), fatty and connective tissue (tendons, fascia) are brought with water to a boiler and are exposed to boiling for an appropriate time depending on the species and the size of the items. The resulting broth is filtered to remove the solid components of the broth and subsequently chilled. The solid fat particles formed in the broth after chilling are optionally removed in order to reduce the fat content of the broth. According to this method, the optimum quantity ratio of carcass items to water is in the range of from 1:2 to 1:6, with 1:4 being particularly preferred. Moreover, it is preferred that the boiling of the carcass items is carried out at a temperature of from 90 to 100 °C for approximately 4 to 12 h, while the broth is preferably chilled to a temperature ranging from 0 °C to 8 °C, until microbiogical standards are met.

Moreover, it is within the context of the invention that the oil composition of the invention comprises at least one additional component. Preferably, the at least one additional component is selected from the group consisting of salts, in particular NaCl, vegetables, antioxidants, stabilizers, preservatives, flavor enhancers, acidifiers, thickening agents, coloring agents, emulsifiying agents, processing aids, sugars, seasonings, spices and mixtures thereof.

According to a further aspect, the present invention relates to a method for the preparation of an oil composition of the present invention, comprising the steps of:
(a) providing oil,
(b) providing broth,
(c) mixing the oil and the broth in a ratio of 1:1 to 1:3.

The oil and broth provided in steps (a) and (b) of the method of the present invention are as defined above. According to the present invention, the step of mixing the oil with the broth (step (c)) of the method of the invention is conducted under mild temperature conditions using an apparatus of vigorous mixing, such as a blender, mixer or cutter. The temperature used during the preparation of the oil composition of the present invention usually is within the range of from 0 °C to room temperature, preferably from 0 °C to 15 °C, more preferably from 0 °C to 10 °C and most preferably from 0 °C to 4 °C. In particular, the mixing of the oil with the broth and optionally the at leat one additional component defined above, takes place at a mixing speed above 1000 rpm, preferably above 2000 rpm, more preferably above 3000 rpm and most preferably above 4000 rpm. The mixing time generally depends from the kind of oil used, the kind of broth used and the applied amounts of oil and broth. A mixing time of 10 min or less, preferably 8 min or less, more preferably 5 min or less and most preferably 3 min or less is, however, appropriate. The ratio of the oil and the broth used for preparing the oil composition of the present invention is in the range of from 1: to 1:3, preferably from 1:1 to 1:2.5, more preferably from 1:1 to 1:2 and most preferably from 1:1 to 1:1.5.

In the oil composition of the present invention, the broth acts as a carrier for the edible oil. Due to the mild conditions used during the preparation of the oil composition of the invention (temperature: 0-25 °C), the characteristics of the edible oil, and in particular the organoleptic, dietetic and nutritional parameters of the oil, remain almost unchanged, and can thus directly and easily be transferred to the foodstuff products containing the oil composition of the present invention.

In a further aspect, the present invention pertains to the use of an oil composition according to the present invention for the preparation of oil containing meat-basted products.

By-the use of the oil composition of the present invention, it is possible, to stably introduce an edible oil in the maximum technologically feasible quantity into meat-based products without the occurrence of oil exudation due to phase separation. The use of processing aids, such as soya protein and milk proteins, in order to stabilize the oil containing meat matrix, is thus essentially no longer necessary. Moreover, the organoleptic, dietetic and nutritional properties of the oil can be directly transferred to the meat-based products containing the oil composition of the invention.

According to the present invention, the meat-based products are preferably selected from the group consisting of cooked sausages, fermented dry or semi-dried sausages, cooked and dry (fermented) and fresh (raw) whole muscular tissue-based products, pastries, pâté, fresh (raw) sausages and coarsely comminuted (or minced) meat-based products. However, any other oil containing meat-based product, not specifically mentioned, may also be prepared using the oil composition of the present invention.

Within the context of the present invention, the term "cooked sausages", whenever used herein, comprises any cooked sausage, preferably selected from the group consisting of frankfurters, parizers, mortadellas, bratwurst-type sausages, country sausages, etc. The term "fermented dry or semi-dried sausages", whenever used herein, comprises any fermented dry or semi-dried sausage, preferably selected from the group consisting of salamis, chorizo, lefkada and hungarian type, etc. Moreover, the term "cooked whole muscular tissue-based products", whenever used herein, comprises any cooked whole muscular tissue-based product, preferably selected from the group consisting of cooked ham, turkey fillet, roast beef, roasted chicken, schnitzel, nuggets, etc. Further, the term "dry (fermented) whole muscular tissue-based products", whenever used herein, comprises any dry (fermented) whole muscular tissue-based product, preferably selected from the group consisting of parma ham, serano ham, coppa, westphalian ham, pancetta, etc, Furthermore, the term "fresh (raw) whole muscular tissue-based products", whenever used herein, comprises any fresh (raw) whole muscular tissue-based product, preferably selected from the group consisting of schnitzels, nuggets, Gordon blue, gyros-type products (e.g. Greek gyros), kebab, souvlaki and the like, The term "pastries", whenever used herein, comprises any pastry, preferably selected from the group consisting of pies, rolls, filled products, etc. In addition, the term "pâté", whenever used herein, comprises any pâté, preferably selected from the group consisting of pâté, pâté de campagne, pâté ardennais, confit de foie, etc. Moreover, the term "fresh (raw) sausages", whenever used herein, comprises any fresh (raw) sausage, preferably selected from the group consisting of Bratwurst-type, Longaniza-type, Chorizo-type, Breakfast sausages-type, etc. Moreover, the term "coarsely comminuted (or minced) meat-based products", whenever used herein, comprises any coarsely comminuted (or minced) meat-based product, preferably selected from the group consisting of döner kebab, meat balls, burger patties, etc.

According to the present invention, the oil composition of the invention is preferably used as a substitute for the animal fat commonly used for the production of the above-mentioned meat-based products. The oil composition, of the invention may, however, also be used as an additional fat source together with animal fat

The amount of the oil composition of the present invention, that is to be used for the preparation of the oil containing meat-based products, particularly depends on the kind of oil, the kind of broth and the ratio of oil to broth of the oil composition of the invention as well as on the intended oil end concentration of the meat-based products to be prepared. An exemplary amount of the oil composition according to the present invention is between 5 and 50 wt.%, preferably between 10 and 40 wt.%, more preferably between 20 and 35 wt.% and most preferably between 25 and 35 wt.%. In particular, the oil end concentration of the meat-based products thus prepared ranges from '1 to 30 wt.%, preferably 2 to 20 wt.%, more preferably 2 to 15 wt.% and most preferably 4 to 15 wt.%.

The oil composition according to the present invention may be incorporated into the meat-based products either by-direct addition to the meat mass (e.g. cooked sausages, pastries, pate, fresh (raw) sausages and coarsely comminuted (or minced) meat-based products) or by injection into the meat tissue (e.g. fermented dry or semi-dried sausages, cooked and dry (fermented) and fresh (raw) whole muscular tissue-based products), following conventional procedures known in the art. In case of cooked whole muscular tissue-based products, the oil composition of the present invention could be used as total or partial substitute of the brine water conventionally used in the preparation of whole muscular tissue-based products. If so, the oil composition of the present invention preferably comprises additional brine ingredients or is preferably mixed with brine prior to use.

Moreover, in another aspect, the present invention relates to a method for the preparation of oil containing meat-based products using an oil composition of the invention. Preferably, the meat-based products prepared according to the method of the present invention are selected from the group consisting of cooked sausages, fermented dry or semi-dried sausages, cooked and dry (fermented) and fresh (raw) whole muscular tissue-based products, pastries, pâté, fresh (raw) sausages and coarsely comminuted (or minced) meat-based products. However, any other oil containing meat-based product, not specifically mentioned, may also be prepared according to the present invention.

Preferably, the oil containing meat-based products prepared according to the method of the invention contain the edible oil as substitute for the animal fat commonly contained in the above-mentioned meat-based products. The meat-based products prepared according to the method of the invention may, however, also contain both edible oil and animal fat.

The amount of the oil composition of the present invention, that is to be used for the preparation of the oil containing meat-based products, particularly depends on the kind of oil, the kind of broth and the ratio of oil to broth of the oil composition of the invention as well as on the intended oil end concentration of the meat-based products to be prepared. An exemplary amount of the oil composition according to the present invention is between 5 and 50 wt_{.}%, preferably between 10 and 40 wt.%, more preferably between 20 and 35 wt.% and most preferably between 25 and 35 wt.%. In particular, the oil end concentration of the meat-based products prepare according to the method of the invention ranges from 1 to 30 wt.%, preferably 2 to 20 wt.%, more preferably 2 to 15 wt.% and most preferably 4 to 15 wt.%.

According to the method of the present invention, the oil composition, of the invention may be incorporated into the meat-based products either by direct addition to the meat mass (e.g. cooked sausages, pastries, pâté, fresh (raw) sausages and coarsely comminuted (or minced) meat-based products) or by injection into the meat tissue prior to chopping whenever appropriate (e.g. fermented dry or semi-dried sausages, cooked and dry (fermented) and fresh (raw) whole muscular tissue-based products), following conventional procedures known in the art. In case of cooked whole muscular tissue-based products, the oil composition of the present invention could be used as total or partial substitute of the brine water conventionally used in the preparation of whole muscular tissue-based products. If so, the oil composition of the present invention preferably comprises additional brine ingredients or is preferably mixed with brine prior to use.

In a preferred embodiment of the invention, the method of the present invention is intended for the preparation of cooked sausages and comprises the steps of:
(a) providing a finely comminuted meat paste, comprising meat, preferably lean meat, an oil composition according to the present invention and additional ingredients,
(b) filling the finely comminuted meat paste in stuffing materials,
(c) subjecting the stuffed meat paste to a heat treatment, and
(d) chilling and packaging the final products.

In step (a) of the above-described method, a finely comminuted meat paste is prepared using meat, preferably lean meat, an oil composition of the invention and other ingredients. The term "lean meat", used in this context, refers to meat having a fat content of up to 10 wt.%, preferably of up to 8 wt.%, more preferably of up to 5 wt.% and most preferably of up to 3 wt.%. Preferably, the meat is selected from meat derived from beef, pork, chicken, lamb, calve, canard, goose or other species fit for human consumption and/or mixtures thereof. The term "other ingredients", as used in this context, comprises any ingredient conventionally used for the production of cooked sausages, such as salts, in particular NaCl or brine ingredients, antioxidants, stabilizers, preservatives, flavor enhancers, acidifiers, thickening agents, coloring agents, emulsifying agents, processing aids, sugars, seasonings, spices and mixtures thereof.

According to the present invention, step (a) of the above-described method is conducted according to conventional procedures known in the art for the preparation of finely comminuted meat pastes suited for the preparation of cooked sausages. An exemplary method for the preparation of a finely comminuted meat paste is the following: Lean meat without visible fat is finely comminuted in the presence of table salt and nitrite salts inside the bowl of a cutter with successive addition and mixing of the oil composition of the present invention and of water/ice. The production is completed with the addition of seasonings and optionally antioxidants and/or other secondary ingredients, up to the full homogenization of the mixture, by gradually increasing the cutting speed until the desired chopping effect is achieved. The use of a phosphate salt mixture (diphosphates, triphosphates, tripolyphosphates and/or polyphosphates, etc.) or other processing aids (e.g. vegetable proteins, milk proteins and egg proteins, starches, etc.) is possible, but not compulsory. In cooked sausages with visible fat and/or meat particles, the fat and/or meat particles are subsequently added and mixed into the resulting meat paste. It is preferred that the temperature during the preparation of the finely comminuted meat paste does not exceed 15 °C, more preferably 12 °C and most preferably 8 °C,

The amount of the oil composition of the present invention to be used for the preparation of the finely comminuted meat paste particularly depends on the kind of oil, the kind of broth and the ratio of oil to broth of the oil composition of the invention as well as on the intended oil concentration of the end product. An exemplary amount of the oil composition of the invention is between 5 and 50 wt.%, preferably between 10 and 40 wit.%, more preferably between 20 and 35 wt.% and most preferably between 25 and 35 wt%.

In steps (b), (c) and (d) of the above-described method, the finely comminuted meat paste is filled in stuffing materials, subjected to a heat treatment, chilled and packaged. According to the present invention, these steps are conducted according to conventional procedures known in the art for the preparation of cooked sausages. Preferably, the core temperature of the cooked sausages does not exceed 75 °C during the heat treatment.

An exemplary oil containing cooked sausage prepared according to the method of the invention is specified in Examples 2 and 3.

In another preferred embodiment of the invention, the method of the present invention is intended for the preparation of fermented dry or semi-dried sausages and comprises the steps of:
(a) injecting pieces of meat, preferably lean meat, with the oil composition according to the present invention,
(b) providing a ground meat mass, comprising meat, preferably lean meat, the injected pieces of meat and additional ingredients,
(c) filling the ground meat mass in stuffing materials,
(d) ripening the stuffed meat mass, and
(e) packaging the final products.

In step (a) of the above-described method, pieces of meat, preferably lean meat, are injected with an oil composition of the present invention. The term "lean meat", used in this context, refers to meat having a fat content of up to 10 wt.%, preferably of up to 8 wt.%, more preferably of up to 5 wt.% and most preferably of up to 3 wt.%. Preferably, the meat is selected from meat derived from beef, pork, chicken, lamb, calve, canard, goose or other species fit for human consumption and/or mixtures thereof.

According to the present invention, step (a) of the above-described method is conducted according to conventional procedures known in the art for injecting substances into pieces of meat. An exemplary method for the injection of the oil composition of the present invention uses an appropriate injection apparatus, such as a Multi Needles Injector. The amount of the oil composition of the present invention to be used for injecting the pieces of meat depends on the kind of oil, the kind of broth and the ratio of oil to broth of the oil composition of the invention as well as on the intended oil concentration of the end product. An exemplary amount of the oil composition according to the present invention is between 5 and 20 wt.%, preferably between 5 and 15 wt.%, more preferably between 5 and 12 wt.% and most preferably between 5 and 10 wt.%.

In step (b) of the above described method, a ground meat mass is prepared using meat, preferably lean meat, and the injected pieces of meat of step (a) as well as additional ingredients. The term "additional ingredients", as used in this context, comprises any ingredient conventionally used for the production of fermented dry or semi-dried sausages, such as salts, in particular NaCl or brine ingredients, antioxidants, stabilizers, preservatives, flavor enhancers, acidifiers, thickening agents, coloring agents, emulsifying agents, processing aids, sugars, seasonings, spices, lactic acid starter cultures and mixtures thereof.

According to the present invention, step (b) of the above-described method is conducted according to conventional procedures known in the art for the preparation of a ground meat mass suited for the preparation of fermented dry or semi-dried sausages. An exemplary method for the preparation of a ground meat mass is the following; Lean meat is finely chopped and mixed using a suitable apparatus, such as a cutter or a combination of a grinder-mixer. A suitable lactic acid starter culture, seasonings and sugars are added. Subsequently, injected pieces of lean meat are added. The mixing process-ends with the addition of the necessary salts, e.g. NaCl, nitrite and nitrate safts, sodium ascorbate. It is preferred that the temperature during the preparation of the ground meat mass does not exceed 15 °C, more preferably 12 °C and most preferably 8 °C.

In steps (c), (d) and (e) of the above-described method, the ground meat mass is filled in stuffing materials, ripened (fermenting and dehydration conditions) and packaged. According to the present invention, these steps are conducted according to conventional procedures known in the art for the preparation of fermented dry or semi-dried sausages. Exemplary ripening conditions that are preferably used according to the present invention are shown in Tables 5 and 6.

An exemplary oil containing fermented dry or semi-dried sausage prepared according to the method of the invention is described in Example 5.

In yet another preferred embodiment of the invention, the method of the present invention is intended for the preparation of cooked whole muscular tissue-based products and comprises the steps of:
(a) injecting whole muscular tissue with the oil composition according to the present invention,
(b) subjecting the injected whole muscular tissue to a massaging step,
(c) filling the whole muscular tissue of step (b) in stuffing materials,
(d) subjecting the stuffed whole muscular tissue to a heat treatment, and
(e) chilling and packaging the final products.

In step (a) of the above-described method, whole muscular tissue is injected with an oil composition according to the present invention. The whole muscular tissue used according to the present invention is selected from meat derived from beef, pork, chicken, lamb, calve, canard, goose or other species fit for human consumption and/or mixtures thereof. In accordance with the present invention, the oil composition of the invention used for injection is preferably either mixed with brine or contains brine ingredients.

According to the present invention, step (a) of the above-described method is conducted according to conventional procedures known in the art for injecting substances into pieces of meat. An exemplary method for the injection of the oil composition of the present invention uses an appropriate injection apparatus, such as a Multi Needles Injector. The amount of the oil composition of the present invention to be used for injecting the whole muscular tissue depends on the kind of oil, the kind of broth and the ratio of oil to broth of the oil composition of the invention as well as on the intended oil concentration of the end product. An exemplary amount of the oil composition according to the present invention is between z2 and 20 wt.%, preferably between 2 and 15 wt.%, more preferably between 2 and 12 wt.% and most preferably between 2 and 10 wt%.

In steps (b), (c) and (d) of the above-described method, the injected whole muscular tissue is subjected to a massaging step, heat-treated, chilled and packaged. According to the present invention, these steps are conducted according to conventional procedures known in the art for the preparation of cooked whole muscular tissue-based products. Preferably, the core temperature of the cooked whole muscular tissue-based products does not exceed 75°C during the heat treatment.

In accordance with the present invention, this method is particularly preferred for the preparation of cooked whole muscular tissue-based products selected from the group consisting of cooked harn, turkey fillet, roast beef, roasted chichen, etc. An exemplary oil containing cooked whole muscular tissue-based product prepared according to the present invention is shown in Example 4.

The advantage of the above-described method over the methods commonly used in the art for preparing whole muscular tissue-based products is the potential to add the oil composition of the present invention as substitute of the water of the brine that is usually used in the preparation of whole muscular tissue-based products. This substitution may be partial, or even total (i.e. 100 %), without the risk of phase separation (oil/water separation), with the oil composition of the present invention acting as a dispersing agent for the brine ingredients:

in an alternative embodiment of the invention, the method of the present invention is likewise intended for the preparation of cooked whole muscular tissue-based products and comprises the steps of:
(a) injecting whole muscular tissue with the oil composition according to the present invention,
(b) further processing the Injected whole muscular tissue to the final products.

In step (a) of the above-described method, whole muscular tissue is injected with an oil composition according to the present invention. The whole muscular tissue used according to the present invention is selected from meat derived from beef, pork, chicken, lamb, calve, canard, goose or other species fit for human consumption and/or mixtures thereof. In accordance with the present invention, the oil composition of the invention used for injection may be mixed with brine or may contain brine ingredients.

According to the present invention, step (a) of the above-described method is conducted according to conventional procedures known in the art for injecting substances into pieces of meat. An exemplary method for the injection of the oil composition of the present invention uses an appropriate injection apparatus, such as a Multi Needles Injector. The amount of the oil composition of the present invention to be used for injecting the whole muscular tissue depends on the kind of oil, the kind of broth and the ratio of oil to broth of the oil composition of the invention as well as on the intended oil concentration of the end product. An exemplary amount of the oil composition according to the present invention is between 2 and 20. wt%, preferably between 2 and 15 wt.%, more preferably between 2 and 12 wt.% and most preferably between 2 and 10 wt.%.

In step (b) of the above-described method, the injected whole muscular tissue is further processed to the final products. According to the present invention, this step is conducted according to conventional procedures known in the art for the preparation of cooked whole muscular tissue-based products. Preferred procedures are for example, messaging, cooking, baking, grilling, deep-frying, with subsequent chilling and packaging.

In accordance with the present invention, this method is particularly preferred for the preparation of cooked whole muscular tissue-based products selected from the group consisting of schnitzels, nuggets, Gordon blue, gyros-type products (e.g. greek gyros), kebab, souvlaki and the like.

In another preferred embodiment of the invention, the method of the present invention is intended for the preparation of fresh (raw) whole muscular tissue-based products and comprises the steps of:
(a) injecting whole muscular tissue with the oil composition according to the present invention,
(b) further processing the injected whole muscular tissue to the final products.

In step (a) of the above-described method, whole muscular tissue is injected with an oil composition according to the present invention. The whole muscular tissue used according to the present invention is selected from meat derived from beef, pork, chicken, lamb, calve, canard, goose or other species fit for human consumption and/or mixtures thereof. In accordance with the present invention, the oil composition of the invention used for injection may be mixed with brine or may contain brine ingredients.

According to the present invention, step (a) of the above-described method is conducted according to conventional procedures known in the art for injecting substances into pieces of meat. An exemplary method for the injection of the oil composition of the present invention uses an appropriate injection apparatus, such as a Multi Needles Injector. The amount of the oil composition of the present invention to be used for injecting the whole muscular tissue depends on the kind of oil, the kind of broth and the ratio of oil to broth of the oil composition of the invention as well as on the intended oil concentration of the end product. An exemplary amount of the oil composition according to the present invention is between 2 and 20 wt.%, preferably between 2 and 15 wt.%, more preferably between 2 and 12 wt.% and most preferably between 2 and 10 wt.%.

In step (b) of the above-described method, the injected whole muscular tissue is further processed to the final products. According to the present invention, this step is conducted according to conventional procedures known in the art for the preparation of fresh (raw) whole muscular tissue-based products. Preferred procedures are for example, optional massaging with subsequent forming and breading or moulding or arranging on a skewer, followed by chilling or freezing and packaging.

In accordance with the present invention, this method is particularly preferred for the preparation of fresh (raw) whole muscular tissue-based products selected from the group consisting of schnitzels, nuggets, Gordon blue, gyros-type products (e.g. Greek gyros), kebab, souvlaki and the like.

In a further preferred embodiment of the invention, the method of the present invention is intended for the preparation of dry (fermented) whole muscular tissue-based products and comprises the steps of:
(a) injecting whole muscular tissue with the oil composition according to the present invention,
(b) further professing the injected whole muscular tissue to the final products.

In step (a) of the above-described method, whole muscular tissue is injected with an oil composition according to the present invention. The whole muscular tissue used according to the present invention is selected from meat derived from beef, pork, chicken, lamb, calve, canard, goose or other species fit for human consumption and/or mixtures thereof.

According to the present invention, step (a) of the above-described method is conducted according to conventional procedures known in the art for injecting substances into pieces of meat. An exemplary method for the injection of the oil composition of the present invention uses an appropriate injection, apparatus, such as a Multi Needles Injector. The amount of the oil composition of the present invention to be used for injecting the whole muscular tissue depends on the kind of oil, the kind of broth and the ratio of oil to broth of the off composition of the invention as well as on the intended oil concentration of the end product. An exemplary amount of the oil composition according to the present invention is between 2 and 20 wt.%, preferably between 2 and 15 wt.%, more preferably between 2 and 12 wt.% and most preferably between 2 and 10 wt.%.

In step (b) of the above-described method, the injected whole muscular tissue is further processed to the final products. According to the present invention, this step is conducted according to conventional procedures known in the art for the preparation of dry (fermented) whole muscular tissue-based products. Preferred procedures are for example, curing, burning and ripening.

An exemplary oil containing dry (fermented) whole muscular tissue-based product prepared according to the method of the invention is described in Example 6.

In another preferred embodiment of the invention, the method of the present invention is intended for the preparation of fresh (raw) sausages and comprises the steps of:
(a) providing a finely and/or coarsely comminuted meat paste, comprising meat, an oil composition according to the present invention and additional ingredients,
(b) filling the finely and/or coarsely comminuted meat paste in stuffing materials, and
(c) chilling or freezing and packaging the final products.

In step (a) of the above-described method, a finely and/or coarsely comminuted meat paste is prepared using meat, preferably lean meat, an oil composition of the invention and other ingredients. The term "lean meat", used in this context, refers to meat having a fat content of up to 10 wt.%, preferably of up to 8 wt.%, more preferably of up to 5 wt.% and most preferably of up to 3 wt.%. Preferably, the meat is selected from meat derived from beef, pork, chicken, lamb, calve, canard, goose or other species fit for human consumption and/or mixtures thereof. The term "other ingredients", as used in this context, comprises any ingredient conventionally used for the production of fresh (raw) sausages, such as salts, in particular NaCl, antioxidants, stabilizers, preservatives, flavor enhancers, acidifiers, thickening agents, coloring agents, emulsifying agents, processing aids, sugars, seasonings, spices, other auxialiary ingredients and mixtures thereof.

According to the present invention, step (a) of the above-described method is conducted according to conventional procedures known in the art for the preparation of finely or coarsely comminuted meat pastes or mixtures thereof suited for the preparation of fresh (raw) sausages. An exemplary method for the preparation of a meat paste suited for the preparation of fresh (raw) sausages is the following: Meat is comminuted in the presence of table salt and nitrite salts inside the bowl of a cutter with successive addition and mixing of the oil composition of the present invention and of water/ice. The production is completed with the addition of seasonings and optionally antioxidants and/or other secondary ingredients, up to the full homogenization of the mixture, by gradually increasing the cutting speed until the desired chopping effect is achieved. The use of a phosphate salt mixture (diphosphates, triphosphates, tripolyphosphates and/or polyphosphates, etc.) or other processing aids (e.g. vegetable proteins, meat proteins, milk proteins, starches, rusk, egg or derivatives of egg, dextrose, etc.) is possible, but not compulsory. It is preferred that the temperature during the preparation of the finely comminuted meat paste does not exceed 15 °C, more preferably 12 °C and most preferably 8 °C.

The amount of the oil composition of the present invention to be used for the preparation of the meat paste particularly depends on the kind of oil, the kind of broth and the ratio of oil to broth of the oil composition of the invention as well as on the intended oil concentration of the end product. An exemplary amount of the oil composition of the invention is between 2 and 40 wt.%, preferably between 2 and 30 wt.%, more preferably between 5 and 25 wt.% and most preferably between 10 and 20 wt.%.

In steps- (b) and (c) of the above-described method, the meat paste is filled in stuffing materials, chilled or frozen, and packaged. According to the present invention, these steps are conducted according to conventional procedures known in the art for the preparation of fresh (raw) sausages.

An exemplary oil containing fresh (raw) sausage prepared according to the method of the invention is specified in Example 8.

Further, in another preferred embodiment of the invention, the method of the present invention is intended for the preparation of coarsely comminuted (or minced) meat-based products and comprises the steps of:
(a) providing a coarsely comminuted (or minced) meat mass, comprising meat, an oil composition according to the present invention and additional ingredients,
(b) forming the coarsely comminuted (or minced) meat mass, and
(c.1) chilling or freezing and packaging the final products or
(c.2) cooking, chilling or freezing and packaging the final products.

In step (a) of the above-described method, a coarsely comminuted (or minced) meat mass is prepared using meat, preferably lean meat, an oil composition of the invention and other ingredients. The term "clean meat", used in this context, refers to meant having a fat content of up to 10 wt.%, preferably of up to 8 wt.%, more preferably of up to 5 wt.% and most preferably of up to 3 wt.%. Preferably, the meat is selected from meat derived from beef, pork, chicken, lamb, calve, canard, goose or other species fit for human consumption and/or mixtures thereof. The term "other ingredients", as used in this context, comprises any ingredients conventionally used for the production of coarsely comminuted (or minced) meat-based products, such as salts, in particular NaCl, antioxidants, stabilizers, preservatives, flavor enhancers, acidifiers, thickening agents, coloring agents, emulsifying agents, processing aids, sugars, seasonings, spices, other auxiliary ingredients and mixtures thereof.

According to the present invention, step (a) of the above-described method is conducted according to conventional procedures known in the art for the preparation of a coarsely comminuted (or minced) meat mass suited for the preparation of coarsely comminuted (or minced) meat-based products. An exemplary method for the preparation of a coarsely comminuted (or minced) meat mass is the following: Meat is minced through suitable apparatus (grinder) in the diserable particle size and then mixed in a mixer with salt(s) and the oil composition of the present invention. The production is completed with the addition of seasonings and optionally antioxidants and/or other secondary ingredients. The use of a phosphate salt mixture (diphosphates, triphosphates, tripolyphosphates and/or polyphosphates, etc.) or other processing aids (e.g. vegetable proteins, milk proteins, meat proteins, starches, rusk, egg or derivatives of egg, dextrose, etc.) is possible, but not compulsory. Optionally, vegetables (e.g. onions) chopped to the desired size may also be added. It is preferred that the temperature during the preparation of the coarsely comminuted meat mass does not exceed 15 °C, more preferably 12 °C and most preferably 8 °C.

The amount of the oil composition of the present invention to be used for the preparation of the coarsely comminuted meat mass particularly depends on the kind of oil, the kind of broth and the ratio of oil to broth of the oil composition of the invention as well as on the intended oil concentration of the end product. An exemplary amount of the oil composition of the invention is between 2 and 40 wt.%, preferably between 2 and 30 wt.%, more preferably between 5 and 25 wt.% and most preferably between 10 and 20 wt.%.

In steps (b) and (c) of the above-described method, the coarsely comminuted (or minced) meat mass is formed, optionally cooked, and chilled or frozen, and packaged. According to the present invention, these steps are conducted according to conventional procedures known in the art for the preparation of coarsely comminuted (or minced) meat-based products.

An exemplary coarsely comminuted (or minced) meat-based product prepared according to the method of the invention is specified in Example 9.

in addition, in another preferred embodiment of the invention, the method of the present invention is intended for the preparation of a pâté and comprises the steps of:
(a) providing a finely comminuted paste, comprising liver or a mixture of liver and meat, an oil composition according to the present invention and additional ingredients,
(b) stuffing or canning the comminuted paste, and
(c) subjecting the stuffed or canned paste to a heat treatment, and
(d) chilling/cooling and packaging the final products.

In step (a) of the above-described method, a finely comminuted paste is prepared using liver or a mixture of liver and meat, an oil composition of the invention and other ingredients. Preferably, the liver is selected from liver derived from beef, pork, chicken, lamb, calve, canard, goose or other species fit for human consumption and/or mixtures thereof. The term "other ingredients", as used in this context, comprises any ingredient conventionally used for the production of a pâté, such as salts, in particular NaCl, antioxidants, stabilizers, preservatives, flavor enhancers, acidifiers, thickening agents, coloring agents, emulsifying agents, processing aids, sugars, seasonings, spices, other auxiliary ingredients and mixtures thereof.

According to the present invention, step (a) of the above-described method is conducted according to conventional procedures known in the art for the preparation of a paste suited for the preparation of a pâté. An exemplary method for the preparation of a finely comminuted paste, comprising liver or a mixture of liver and meat, is the following: Liver is finely comminuted in the presence of table salt and nitrite salts inside the bowl of a cutter with successive addition and mixing of the oil composition of the present invention. The production is completed with the addition of seasonings and optionally antioxidants and/or other secondary ingredients, up to the full homogenization of the mixture, by gradually increasing the cutting speed until the desired chopping effect is achieved. The use of a phosphate salt mixture (diphosphates, triphosphates, tripolyphosphates and/or polyphosphates, etc.) or other processing aids (e.g. vegetable proteins, milk proteins and egg proteins, starches, etc.) is possible, but not compulsory. According to the kind of pâté to be produced, like the country pâté, pre-cooked meat or liver particles are included to provide a visible particle appearance. It is preferred that the temperature during the preparation of the finely comminuted meat paste does not exceed 15 °C, more preferably 12 °C and most preferably 8 °C.

The amount of the oil composition of the present invention to be used for the preparation of the finely comminuted paste particularly depends on the kind of oil, the kind of broth and the ratio of oil to broth of the oil composition of the invention as well as on the intended oil concentration of the end product. An exemplary amount of the oil composition of the invention is between 5 and 50 wt.%, preferably between 10 and 40 wt.%, more preferably between 20 and 35 wt.% and most preferably between 25 and 35 wt.%.

In steps (b), (c) and (d) of the above-described method, the finely comminuted paste is stuffed or canned and heat-treated. Heat treatment conditions refer to pasteurization (following stuffing) or sterilization (following canning), according to known conventional procedures. Subsequently, the heat-treated stuffed or canned paste is chilled or cooled and packaged. According to the present invention, these steps are conducted according to conventional procedures known in the art for the preparation of a pâté.

An exemplary pâté prepared according to the method of the invention is specified in Example 7.

According to another aspect, the present invention relates to an oil containing meat-based product obtainable according to the method of the present invention described above.

Moreover, in a further aspect, the present invention pertains to the use of an oil composition according to the present invention for the preparation of oil containing emulsion-type foodstuff products.

By the use of the oil composition of the invention, an edible oil can be easily and stably introduced in the maximum technologically feasible quantity into emulsion-type foodstuff products. The emulsion-type foodstuff products thus prepared do almost not tend to undergo phase separation.

According to the present invention, the emulsion-type foodstuff products are selected from the group consisting of salad dressings, mayonnaise-type products and the like. However, any other oil containing emulsion-type foodstuff product, not specifically mentioned, may also be prepared using the oil composition of the present invention.

Preferably, the oil composition according to the present invention is used as a substitute for the oil and/or fat commonly used for the production of the above-mentioned emulsion-type foodstuff products. The oil composition of the invention may, however, also be used together with oil and/or fat.

The amount of the oil composition of the present invention to be used for the preparation of the oil containing emulsion-type foodstuff products particularly depends on the kind of oil, the kind of broth and the ratio of oil to broth of the oil composition of the invention as well as on the intended oil end concentration of the emulsion-type foodstuff products to be prepared. An exemplary amount of the oil composition according to the present invention is between 5 and 80 wt.%, preferably between 10 and 70 wt.%, more preferably between 20 and 50 wt.% and most preferably between 25 and 50 wt.%. In particular, the oil end concentration of the emulsion-type foodstuff products thus prepared ranges from 1 to 75 wt.%, preferably 2 to 60 wt.%, more preferably 2 to 50 wt.% .and most preferably 5 to 35 wt.%.

The oil composition according to the present invention may be incorporated into the emulsion-type foodstuff products by mixing the oil composition with the other ingredients used to prepare the intended emulsion-type foodstuff product following conventional procedures known in the art.

An exemplary oil containing emulsion-type foodstuff product prepared using the oil composition of the invention is depicted in Example 8.

The present invention will now be further illustrated by the following figure and examples.

### Figure

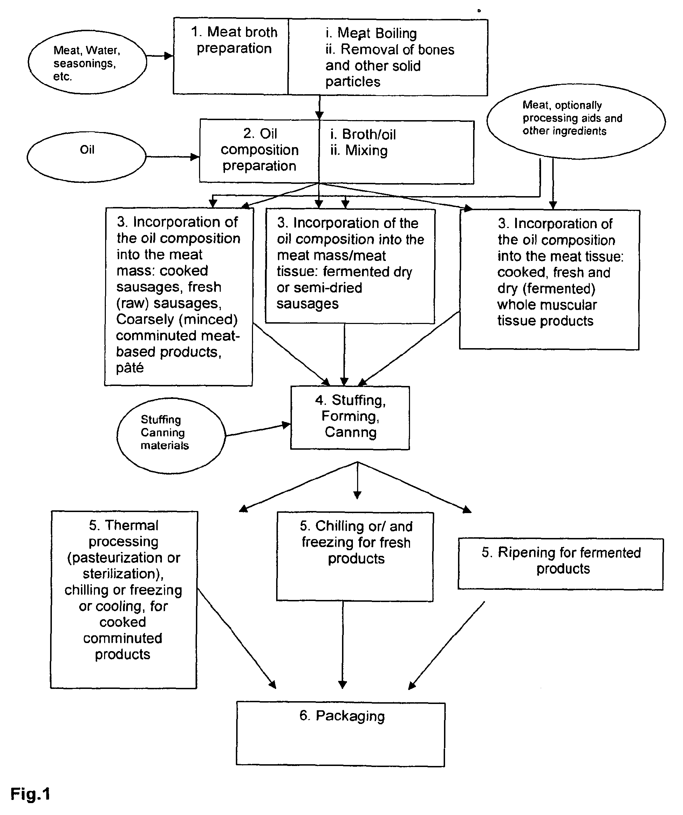

Figure 1 is a schematic representation showing different exemplary embodiments of the preparation and the use of an oil composition according to the invention.

### Examples

### Example 1: Preparation of an oil composition according to the present invention

In the following, an exemplary preparation of a pork broth and a chicken broth according to the invention is described: Porcine or poultry carcass items, consisting-of long bones with attached striated muscle, fatty and connective tissues (tendons, fascia), were put with water and optionally with vegetables or seasonings for flavor enhancement in a boiler, in a ratio of 4 parts of water and 1 part of carcass items, and were exposed to boiling at a temperature of 90-95 °C for approximately 8 hours, depending on the species and the size of the items. The broth was then chilled to a temperature varying between 0 °C and 4 °C. Following this, the broth was transferred into a mixing apparatus (blender, cutter or mixer) to achieve homogenization. Olive oil was then gradually/slowly added under thorough mixing (mixing speed: >4000 rpm for approximately 4-6 min, maximum temperature: 10 °C) until the oil was fully incorporated and the mixture was homogenized. The most common mixing ratio of the ingredients was: 1 part of oil to 1 part of broth. However, the mixture of oil/broth in a ratio of 1:2 or 1:3 was also feasible. Greater percentages of broth in the concoction were not considered purposeful, as the relative oil quantities in the final product were greatly reduced.

An exemplary broth composition is shown in Table 1.

| Characteristics | Pork Broth | Chicken Broth |
|---|---|---|
| Density (g/ml) | 0.99 | 1.00 |
| Nitrogen (%) | 0.22 | 0.12 |
| Collagen (%) | 5.92 | 2.0 |
| Fat (%) | <1 % | <1 % |

The oil composition exhibited great stability (no phase separation) when kept at a temperature of 4 °C for up to 4 hours, while it could easily be incorporated either by direct addition into the meat batter or by injection into muscle tissue using the necessary equipment (e.g. Multi Needles Injector). Moreover, the oil composition could also be used for the partial or total replacement of the brine water conventionally used in the production of whole muscular tissue-based products, using a direct injection method (e.g. the Multi Needles Injector BELAM MI 450, -working pressure: 1.5 bar).

### Example 2: Preparation of cooked (i.e. emulsion-type) sausages out of finely comminuted meat systems (frankfurters)

In the following, an exemplary method of preparing frankfurters with and without the use of processing aids is described: Lean meat without visible fat was finely comminuted in the presence of table salt/nitrite salts inside the cutter bowl (approximately 2 min, speed of the knifes: 1500 rpm), with successive addition and mixing of the oil composition according to the invention (see, e.g., Example 1, temperature: 0-4 °C) and of water/ice. The use of a phosphate salt mixture (diphosphates, triphosphates, tripolyphosphates, polyphosphates, etc.) or other processing aids (e.g. vegetable proteins, meat proteins, milk proteins and egg proteins, starches, etc.) was possible, but not compulsory. The production was completed with the addition of seasonings, antioxidants and other secondary ingredients, up to the full homogenization of the mixture, by gradually increasing the cutting speed until the desired chopping effect was achieved. The indicative chopping time was about 8-12 min and the desired final temperature was <12 °C. The ready meat batter was then processed according to common practices known in the art, like stuffing, thermal processing (i.e. pasteurization), chilling and packaging. The optimum ratio of meat/oil composition ranged from between 4:1 and 2:1. with a percentage of incorporated oil in the range of approximately 5-17 wt.%. Water losses during thermal processing proportionally increased the percentage of incorporated oil.

### Frankfurters with the use of processing aids:

| | |
|---|---|
| Pork meat 95/5 (ratio of lean meat/fat) + other ingredients: | 55 wt.% |
| Water/Ice: | 20 wt.% |
| Oil composition according to the present invention: | 25 wt.% |

Per kg of meat batter, the following ingredients were added:

| | |
|---|---|
| Nitrite salt (0.6 ‰ sodium nitrite) | 18.0 g |
| Di-/Tri-/Polyphosphate salts | 4.0 g |
| Sodium ascorbate | 0-5 g |
| Dextrose | 8.0 g |
| Seasonings | 4.0 g |
| Sodium caseinate | 5.0 g |
| or | |
| Pork meat 95/5 (ratio of lean meat/fat) + other ingredients: | 55 wt.% |
| Water/Ice: | 20 wt.% |
| Oil composition according to the present invention: | 25 wt.% |

Per kg of meat batter, the following ingredients were added:

| | |
|---|---|
| Table salt | 18.0 g |
| Sodium nitrite | 0.12 g |
| Di-/Tri-Polyphosphate salts | 4.0 g |
| Sodium ascorbate | 0.5 g |
| Dextrose | 8.0 g |
| Seasonings | 4.0 g |
| Sodium caseinate | 5.0 g |

| Frankfurters with out the use of processing aids: | |
|---|---|
| Pork meat 95/5 (ratio of lean meat/fat) + other ingredients: | 65 wt.% |
| Water/Ice: | 15 wt.% |
| Oil composition according to the present invention: | 20 wt.% |

| Per kg of meat batter, the following ingredients were added: | |
|---|---|
| Nitrite salt (0.6 %o sodium nitrite) | 20.0 g |
| Sodium ascorbate | 0.5 g |
| Dextrose | 8.0 g |
| Seasonings | 4.0 g |
| Sugar | 5.0 g |
| or | |
| Pork meat 95/5 (ratio of lean meat/fat) + other ingredients: | 65 wt.% |
| Water/Ice: | 15 wt.% |
| Oil composition according to the present invention: | 20 wt.% |

| Per kg of meat batter, the following ingredients were added: | |
|---|---|
| Table salt | 18.0 g |
| Sodium nitrite | 0.12 g |
| Sodium ascorbate | 9.5 g |
| Dextrose | 8.0 g |
| Seasonings | 4.0 g |
| Sugar | 5.0 g |

The meat products of this category produced using the oil composition according to the present invention exhibited clearly improved organoleptic characteristics over products produced by a method of direct oil incorporation. This organoleptic improvement is due to the substantial presence of the oil composition of the present invention that gives a desired texture and a mouth feel (bite) effect similar to the one attributed to conventional cooked sausages containing animal fat. Thus, the oil composition according to the present invention can successfully act as a substitute of animal fat in the preparation of meat-based products.

The results of a sensory evaluation for two identical frankfurters, the one produced by the method described above using the oil composition of the invention and the other by direct olive oil incorporation are shown in Table 2.

**Table 2**

| Organoleptic characteristics*^{/}** | Olive oil composition | Olive oil |
|---|---|---|
| Appearance (shape, color) | 3.70 | 3.55 |
| Texture (tenderness, juiciness) | 4.05 | 2.95 |

| | | |
|---|---|---|
| * Blind test with 20 trained testers ** (mean) ascending order from 0 to 5, reflecting preference | | |

### Example 3: Preparation of cooked (i.e. emulsion-type) two-phase sausages out of finely comminuted meat systems (parizer and mortadella)

In the following, an exemplary method of preparing parizers or mortadella is described: Lean meat without visibly fat was finely comminuted in the presence of table salt/nitrite salts inside the cutter bowl (approximately 2 min, speed of the knifes: 1500 rpm), with successive addition and mixing of the oil composition according to the invention (see e.g. Example 1, temperature: 0-4 °C) and of water/ice. The use of a phosphate salt mixture (diphosphates, triphosphates, tripolyphosphates, polyphosphates, etc.) or other processing aids (e.g. vegetable proteins, meat proteins, milk proteins and egg proteins, starches, etc.) was possible, but not compulsory. The production was completed with the addition of seasonings, antioxidants and other secondary ingredients, up to the full homogenization of the mixture, by gradually increasing the cutting speed until the desired chopping effect was achieved. The indicative chopping time was about 8-12 min and the desired final temperature was <12 °C. Then, visible fatty and/or meat particles were added and mixed up. The ready meat batter was then processed according to common practices known in the art, like stuffing, thermal processing (pasteurization), chilling and packaging. The optimum ratio of meat/oil composition ranged from between 4:1 and 2:1, with a percentage of incorporated oil in the range of approximately 5-17 wt.%. Water losses during thermal processing proportionally increased the percentage of incorporated oil.

### Example 4: Preparation of cooked whole muscular tissue-based products

In the following, an exemplary method of cooked whole muscular tissue-based products, such as ham, turkey fillet or roast beef is described: A quantity of an oil composition according to the present invention (see e.g. Example 1) was either mixed with brine or with brine ingredients and was injected into a piece of whole lean muscular tissue suitable for the production of cooked whole muscular tissue-based products by an injection apparatus (e.g. Multi Needles Injector, temperature: 0-4 °C, 5.7<pH< 6.3). Subsequently, the piece of whole lean muscular tissue was subjected to a massaging treatment (the selection of the massaging conditions was up to the judging of the technician skilled in the art). The whole lean muscular tissue was then stuffed and a thermal treatment according to common practices known in the art followed (indicative temperature for the product core was 69-72 °C, depending on the product type and the size of the product). The percentage of the oil composition according to the invention that was incorporated into the meat ranged from 10-50 wt.%, with the respective added oil percentage ranging approximately from 2-20 wt.%.

The advantage of this method over the methods commonly used in the art for preparing whole muscular tissue-based products is the potential to add the oil composition of the present invention as substitute of the water of the brine that is usually used in the preparation of whole muscular tissue-based products. This substitution may be partial, or even total (i.e. 100 %), without the risk of phase separation (oil/water separation), with the oil composition of the present invention acting as a dispersing agent for the brine ingredients.

Tables 3a, 3b and 4a, 4b show the preparation of a smoked ham (percentage of oil composition of the invention: 16 wt.% injected, without phosphates/processing aids; final yield 105 kg, meaning that 116 kg of injected meat results in 105 kg of final product) and of a cooked turkey (percentage of oil composition of the invention: 45% injection level; final yield 145 kg).

**Table 3a**

| Additives | g/kg Final product | % Brine | % Final product |
|---|---|---|---|
| Sodium ascorbate | 0.6 | 0.39 | 0.06 |
| Sugar | 5 | 3.28 | 0.50 |
| Dextrose | 4 | 2.63 | 0.40 |
| Spices | 3 | 1.97 | 0.30 |
| Nitrite salt, 0.6‰ | 18 | 11.81 | 1.80 |
| Oil composition (oil/broth: 1:1) | | 60.00 | |
| Water/ice | | 19.92 | |
| Oil | | | 4.57 |
| Total | | 100.00 | |

**Table 3b**

| Additives | g/kg Final product | % Brine | % Final product |
|---|---|---|---|
| Sodium ascorbate | 0.6 | 0.39 | 0.06 |
| Sugar | 5 | 3.28 | 0.50 |
| Dextrose | 4 | 2.63 | 0.40 |
| Spices | 3 | 1.97 | 0.30 |
| Table Salt | 18 | 11.81 | 1.80 |
| Sodium Nitrite | 0.15 | 0.10 | 0.012 |
| Oil composition (oil/broth: 1:1) | | 60.00 | |
| Water/ice | | 19.82 | |
| Oil | | | 4.57 |
| Total | | 100.00 | |

**Table 4a**

| Additives | g/kg Final product | % Brine | % Final product |
|---|---|---|---|
| phosphates | 4 | 1.29 | 0.40 |
| Sodium ascorbate | 0.6 | 0.19 | 0.06 |
| Sugar | 8 | 2.58 | 0.80 |
| Dextrose | 5 | 1.61 | 0.50 |
| Soy isolate | 8 | 2.58 | 0.80 |
| Spices | 3 | 0.97 | 0.30 |
| Carrageen | 4 | 1.29 | 0.40 |
| Wheat starch | 10 | 3.22 | 1.00 |
| Nitrite salt, 0.6 ‰ | 18 | 5.80 | 1.80 |
| Subtotal | | 19.53 | |
| Oil composition (oil/broth: 1:2) | | 80.47 | |
| Oil^{.} | | | 8.32 |
| Total | | 100.00 | |

**Table 4b**

| Additives | g/kg Final product | % Brine | % Final product |
|---|---|---|---|
| Phosphates | 4 | 1.29 | 0.40 |
| Sodium ascorbate | 0.6 | 0.19 | 0.06 |
| Sugar | 8 | 2.58 | 0.80 |
| Dextrose | 5 | 1.61 | 0.50 |
| Soy isolate | 8 | 2.58 | 0.80 |
| Spices | 3 | 0.97 | 0.30 |
| Carrageen | 4 | 1.29 | 0.40 |
| Wheat starch | 10 | 3.22 | 1.00 |
| Table Salt | 18 | 5.80 | 1.80 |
| Sodium Nitrite | 0.12 | 0.04 | 0.012 |
| Subtotal | | 19.53 | |
| Oil composition (oil/broth: 1:2) | | 80.43 | |
| Oil | | | 8.32 |
| Total | | 100.00 | |

Moreover, the injection of the oil composition of the present invention into whole muscular tissue described above was also successfully applied to the products of the so called "sectioned and formed" category with a percentage of finely chopped meat of up to 10 wt.%, by using the corresponding injection methodology for whole muscular tissue and subsequently cutting the meat to the desired size by a suitable cutter (e.g. 13-20 mm). Products kept under chilling or freezing conditions, such as nuggets, pork or beef schnitzels, may be produced accordingly, subsequently using the common practices of breading, cooking (frying, boiling, grilling) and chilling (temperature: 0-4 °C) or/and freezing (temperature: <-18 °C). Gyros- or kebab-type meat-based products may also be produced by injecting the oil composition of the present invention into whole muscular tissue, In particular, the injection of the oil composition of the present invention into whole muscular tissue described above was successfully applied to gyros- or kebab-type meat products (e.g. Greek gyros) by using the corresponding injection methodology for whole muscular tissue, subsequently using the common practices of tumbling or massaging, cutting the resulting product into slices or dices, filling into moulds or arranging on a skewer bar, chilling (temperature: 0-4 °C) and/or freezing (temperature: <-18 °C). The optimum ratio of meat/oil composition ranged between 6:1 and 3:1 with a percentage of incorporated oil in the range of 2-20 wt.%.

### Example 5: Preparation of fermented dry or semi-dried sausages out of finely chopped meat systems (dry and semi-dry salami).

In the following, an exemplary method of preparing dry and semi-dry salami (e.g. salami of lefkada type and salami of chorizo type) is described: Meat of adult animals, suitable for the production of fermented products, of a temperature of approximately -10 °C was finely chopped and mixed (diameter: 4-13 mm) using a suitable apparatus (cutter or a combination of grinder-mixer). A suitable lactic acid starter culture, seasonings and sugars were then added. Subsequently, a second quantity of lean meat, cut to the desired size (e.g. 8 mm), previously injected with an oil composition according to the present invention (see e.g. Example 1) was added. The mixing process ended with the addition of the necessary salts (table salt, nitrite and nitrate salts, sodium ascorbate). Following this, the common practices known in the art for the production of fermented sausages were conducted.

A table with the typical ripening conditions used for dry salamis is shown below (Table 5). Regarding the semi-dry salamis, the fermentation phase conditions, with respect to time and temperature, vary with the type of product, diameter and the recommendations of the manufacturer of the commercial starter culture if it is used

in product formulation. Table 6 presents an example of the next processing steps used for the production of salamis of Bierwurst type.

**Table 5**

| | | |
|---|---|---|
| Fermentation | 6 hours/24 °C/no r.h. | |
| | 48 hours/22 °C/94 % r.h. | |
| | 24 hours/22. °C/92 % r.h. | moderate smoking approx. 0.5 h |
| | 24 hours/20 °C/90 % r.h. | moderate smoking approx. 1-2 h |
| | 24 hours/20 °C/88 % r.h. | |
| | 24 hours/8 °C/86 % r.h. | moderate smoking approx. 1-2 h |
| | 24 hours/18 °C/84 % r.h. | |
| | 24 hours/18 °C/82 % r.h. | |
| Post ripening | 14-16 °C and 76-78 % r.h | till weigh losses 30-35 % |

| | | |
|---|---|---|
| r.h. relative humidity | | |

A table with the typical processing steps used for semi-dry salamis of Bierwurst type is shown below.

**Table 6**

| Process | Humidity | Temperature | Time | Circulation |
|---|---|---|---|---|
| Reddening | > 90 % | 55 °C | 30 min | I |
| Drying | - | 60 °C | 10-15 min | II |
| Smoking | - | 70-75 °C | 15-20 min | II |
| Cooking | > 100 % | 78 °C | till core >68 °C | I |
| Shower | - | - | ∼1.0 min | - |
| Cooling | - | <4 °C | - | - |
| Post ripening | 76-78 % | 13 °C | till desirable weigh loss | |

### Example 6: Preparation of dry (fermented) whole muscular tissue-based products

In the following, an exemplary method of preparing parma or serrano ham is described: A quantity of an oil composition according to the present invention (see e.g. Example 1) was injected into a piece of whole lean muscular tissues from carcasses of adult animals (pork) suitable for the production of meat-based fermented products. The percentage of oil composition incorporation in the muscular tissue ranged between 10-15 wt.%, thus leading to an oil incorporation of approximately 3-7.5 wt%. Water losses (usually 30-35 %) increased the percentage of incorporated oil in the final product. Following the injection, the meat was treated according to the common practices known in the art for the production of dry (fermented) whole muscular tissue-based products, such as: curing (meat curing ingredients: table salt, sugars, nitrite and nitrate salts, seasonings, antioxidants and lactic acid starter cultures), burning (burning brings a salt equilibrium content in the whole meat mass, thus facilitating the microbiological stability of the products and the generation of a characteristic flavor, meat tendering and color stabilization), ripening (under suitable temperature and humidity conditions to achieve dehydration and generation of the desired organoleptic properties of the product).

The characteristic ripening conditions used for parma ham are shown in Table 7 and for serrano ham in Table 8.

**Table 7**

| | | | |
|---|---|---|---|
| 1. Ripening | 25-30 °C | 80-85 % r.h. | 5 days |
| Selection of spoiled hams | | | |
| 2. Ripening | 15-18 °C | 75-85 % r.h. | until a water loss of 25 % |
| Sealing of the meat surface with a special lard mixture | | | |
| 3. Ripening | 10-12 °C | 65-75 % r.h. | 180-330 days |

| | | | |
|---|---|---|---|
| r.h. relative humidity | | | |

**Table 8**

| | | | |
|---|---|---|---|
| 1. Ripening | 6-16 °C | 80-90 *%* r.h. | >45 days |
| 2. Ripening | 16-24 °C | -50-85 % r.h. | >35 days |
| 3. Ripening | 24-34 °C | 70-80 % r.h. | >35 days |
| 4. Ripening | 12-20 °C | 70-80 % r.h. | >35 days, until a water loss of 34 % |

| | | | |
|---|---|---|---|
| r.h. relative humidity | | | |

### Example 7: Preparation of a pâté

In the following, an exemplary method of preparing a pâté is described: Liver of pork, duck or other edible species fit for human consumption was subjected in the presence of table salt/nitrite salts, to a fine comminutation in a cutter for approximately 2 min at 1500 rpm (knife rotations), with successive addition and mixing of the oil composition according to the present invention (see e.g. Example 1, temperature: 0-4 °C) and of water/ice. The use of a phosphate salt mixture (diphosphates, triphosphates, tripolyphosphates, polyphosphates, etc.) or other processing aids was possible, but not compulsory. The production was completed with the addition of seasonings, antioxidants, and other secondary ingredients, up to the full homogenization of the mixture by gradually increasing the cutting speed until the desired chopping effect was achieved. According to the kind of pâté to be produced, like the country pâté, pre-cooked meat or liver particles were included. The product was then stuffed or canned and thermally processed (pasteurization or sterilization, respectively) according to common practices known in the art.

### Example 8: Preparation of fresh (raw) sausages

In the following, an exemplary method of preparing fresh (raw) sausages, such as Bratwurst-type, Longaniza-type, Chorizo-type, Breakfast sausages-type, etc, is described: Meat, preferably lean meat, of a temperature of approximately <3 °C, was finely and/or coarsely comminuted in the presence of table salt inside the cutter bowl (approximately 2 min, speed of the knifes: 1500 rpm). Subsequently, a quantity of the oil composition of the invention was added and mixed therein. The use of phosphate salt (such as diphosphates, triphosphates, tripolyphosphates, polyphosphates or any mixture thereof) or other processing aids (such as, e.g., vegetable proteins, meat proteins, stanches, rusk, egg or derivatives of egg, dextrose, etc.) was possible, but not compulsory. The production was completed with the addition of seasonings, antioxidants and other secondary ingredients, up to the full homogenization of the mixture, by gradually increasing the cutting speed until the desired chopping effect was achieved. The indicative chopping time was about 2-5 min and the desired final temperature was <6 °C. The ready meat dough was then processed according to common practices known in the art, like stuffing, optional partial ripening, chilling or freezing. The optimum ratio of meat/oil composition ranged between 5:1 and 3:1, with a percentage of incorporated oil in the range of 2-20 wt.%.

### Example 9: Preparation of coarsely comminuted (or minced) meat-based products

In the following, an exemplary method of preparing coarsely comminuted (or minced) meat-based products, such as doner kebab preparations, meat balls and burger patties, etc., is described: Meat, preferably lean meat, of a temperature of approximately < 3°C was chopped and mixed using a suitable apparatus, such as a cutter or a combination of a grinder-mixer. Mixing occurred in the presence of table salt inside the mixing bowl or cutter bowl (approximately 1 min, speed of the knives: 1500 rpm). Subsequently, a quantity of the oil composition of the invention was added and mixed therein. The use of phosphate salt (such as diphosphates, triphosphates, tripolyphosphates, polyphosphates or any mixture thereof) or other processing aids (such as, e.g., vegetable proteins, meat proteins, starches, rusk, egg or egg derivatives, dextrose, etc.) was possible, but not compulsory. Optionally, vegetables (such as, e.g., onions) cut to the desired size were also added. The production was completed with the addition of seasonings, antioxidants and other secondary ingredients, up to the full homogenization of the mixture. The indicative mixing time was about 2-5 min and the desired final temperature was <6 °C. The ready meat mixture was then processed according to common practices known in art, like i) forming and chilling or freezing or ii) forming, cooking and chilling/freezing. For example, for döner kebab applications, the resulting minced meat mixture, containing the oil composition of the invention, was filled in an appropriate forming mould and the ready formed product was either i) chilled/frozen or ii) cooked and chilled/frozen. The optimum ratio of meat/oil composition ranged between 6:1 and 3:1, with a percentage of incorporated oil in the range of 2-20 wt.%.

### Example 10: Preparation of oil containing emulsion-type foodstuff products

In the following, an exemplary method of preparing oil containing emulsion-type foodstuff products, such as salad dressings or mayonnaise-type products, is described: An exemplary emulsion-type foodstuff, namely a mayonnaise-type dressing, has a component composition as described in the following table (Table 9). All the ingredient components, not including the oil composition (1 part of sunflower oil: 3 parts of broth) are mixed together under mild temperature conditions using an apparatus of vigorous mixing, such as a blender or mixer, for approximately 1 min with successive addition and mixing of the oil composition according to the present invention (see, e.g., Example 1, temperature: 0-4 °C), until a fully homogenized mixture is obtained. The homogenized mixture then follows the conventional manufacturing steps for mayonnaise-type dressing production known by the person skilled in the art. The final product exhibits better organoleptic properties (namely flavour, taste, texture, etc.) than conventional mayonnaise-type dressings.

**Table 9**

| Ingredient components | wt.% |
|---|---|
| Oil composition (oil: broth 1:3) | 84 |
| Sugar | 3 |
| Salt | 1.5 |
| Egg yolk | 5 |
| Milk proteins | 2 |
| Vinegar | 2 |
| Mustard | 1.5 |
| Modified potato starch | 1 |

## Claims

1. An oil composition, comprising oil and broth, **characterized in that** the ratio of oil to broth ranges from 1:1 to 1:3.

2. The oil composition of claim 1, wherein the oil is a vegetable oil selected from the group consisting of olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil and mixtures thereof.

3. The oil composition of claim 1 or 2, wherein the broth is selected from the group consisting of beef broth, pork broth, chicken broth, veal broth, lamb broth, canard broth, goose broth or a broth made by other edible species fit for human consumption, vegetable broth and mixtures thereof.

4. The oil composition of any one of claims 1 to 3, wherein the fat content of the broth is equal to or less than 5 wt.%.

5. A method for the preparation of an oil composition according to any one of claims 1 to 4, comprising the steps of:
(a) providing oil,
(b) providing broth,
(c) mixing the oil and the broth in a ratio of 1:1 to 1:3.

6. Use of an oil composition according to any one of claims 1 to 4 for the preparation of oil containing meat-based products.

7. The use of claim 6, wherein the meat-based products are selected from the group consisting of cooked sausages, fermented dry or semi-dried sausages, cooked and dry (fermented) and fresh (raw) whole muscular tissue-based products, pastries, pâté, fresh (raw) sausages and coarsely comminuted (or minced) meat-based products.

8. A method for the preparation of oil containing meat-based products using an oil composition of any one of claims 1 to 4.

9. The method of claim 8, wherein the meat-based products are selected from the group consisting of cooked sausages, fermented dry or semi-dried sausages, cooked and dry (fermented) and fresh (raw) whole muscular tissue-based products, pastries, pâté, fresh (raw) sausages and coarsely comminuted (or minced) meat-based products.

10. The method of claim 9, wherein the meat-based products are cooked sausages and the method comprises the steps of:
(a) providing a finely comminuted meat paste, comprising meat, the oil composition according to any one of claims 1 to 4 and additional ingredients,
(b) filling the finely comminuted meat paste in stuffing materials,
(c) subjecting the stuffed meat paste to a heat treatment, and
(d) chilling and packaging the final products.

11. The method of claim 9, wherein the meat-based products are fermented dry or semi-dried sausages and the method comprises the steps of:
(a) injecting pieces of meat with the oil composition according to any one of claims 1 to 4,
(b) providing a ground meat mass, comprising meat, the injected pieces of meat and additional ingredients,
(c) filling the ground meat mass in stuffing materials,
(d) ripening the stuffed meat mass, and
(e) packaging the final products.

12. The method of claim 9, wherein the meat-based products are cooked whole muscular tissue-based products and the method comprises the steps of:
(a) injecting whole muscular tissue with the oil composition according to any one of claims 1 to 4 and additional ingredients,
(b) subjecting the injected whole muscular tissue to a massaging step,
(c) filling the whole muscular tissue of step (b) in stuffing materials,
(d) subjecting the stuffed whole muscular tissue to a heat treatment, and
(e) chilling and packaging the final products.

13. The method of claim 9, wherein the meat-based products are dry (fermented) whole muscular tissue-based products and the method comprises the steps of:
(a) injecting whole muscular tissue with the oil composition according to any one of claims 1 to 4,
(b) further processing the injected whole muscular tissue to the final products.

14. The method of claim 9, wherein the meat-based products are fresh (raw) sausages and the method comprises the steps of:
(a) providing a finely and/or coarsely meat paste, comprising meat, an oil composition according to any one of claims 1 to 4 and additional ingredients,
(b) filling the meat paste in stuffing materials, and
(c) chilling or freezing and packaging the final products.

15. The method of claim 9, wherein the meat-based products are coarsely comminuted (or minced) meat-based products and the method comprises the steps of:
(a) providing a coarsely comminuted meat mass, comprising meat, an oil composition according to any one of claims 1 to 4 and additional ingredients,
(b) forming the coarsely comminuted meat mass, and
(c.1) chilling or freezing and packaging the final products, or
(c.2) cooking, chilling or freezing and packaging the final products.

16. An oil containing meat-based product, obtainable according to a method of any one of claims 8 to 15.

17. Use of an oil composition according to any one of claims 1 to 4 for the preparation of oil containing emulsion-type foodstuff products, preferably selected from mayonnaise-type products and salad dressings.

## Patentansprüche

1. Ölzusammensetzung, umfassend Öl und Brühe, **dadurch gekennzeichnet, dass** das Verhältnis von Öl zu Brühe von 1:1 bis 1:3 reicht.

2. Ölzusammensetzung nach Anspruch 1, wobei es sich bei dem Öl um ein Pflanzenöl handelt, ausgewählt aus der Gruppe bestehend aus Olivenöl, Palmöl, Sojabohnenöl, Canolaöl, Kürbiskernöl, Maiskeimöl, Rapsöl, Sonnenblumenöl, Safloröl, Erdnussöl, Walnussöl, Weizenkeimöl, Traubenkernöl, Sesamöl, Arganöl, Reisöl, und Gemischen davon.

3. Ölzusammensetzung nach Anspruch 1 oder 2, wobei die Brühe ausgewählt ist aus der Gruppe bestehend aus Rinderbrühe, Schweinebrühe, Hühnerbrühe, Kalbsbrühe, Lammbrühe, Entenbrühe, Gänsebrühe oder einer Brühe hergestellt aus anderen essbaren Arten, die für menschlichen Verzehr geeignet sind, Gemüsebrühe, und Gemischen davon.

4. Ölzusammensetzung nach einem der Ansprüche 1 bis 3, wobei der Fettgehalt der Brühe gleich 5 Gewichtsprozent oder weniger als 5 Gewichtsprozent beträgt.

5. Verfahren zur Herstellung einer Ölzusammensetzung gemäß einem der Ansprüche 1 bis 4, umfassend die Schritte:
(a) Bereitstellen von Öl,
(b) Bereitstellen von Brühe,
(c) Vermischen des Öls und der Brühe in einem Verhältnis von 1:1 bis 1.3.

6. Verwendung einer Ölzusammensetzung gemäß einem der Ansprüche 1 bis 4 zur Herstellung von Öl enthaltenden Erzeugnissen auf Fleischgrundlage.

7. Verwendung nach Anspruch 6, wobei die Erzeugnisse auf Fleischgrundlage ausgewählt sind aus der Gruppe bestehend aus gekochten Würsten, fermentierten trockenen oder halbgetrockneten Würsten, gekochten und trockenen (fermentierten) und frischen (rohen) Erzeugnissen auf Grundlage von ganzem Muskelgewebe, Gebäckstücken, Pastete, frischen (rohen) Würsten und grob zerkleinerten (oder zerhackten) Erzeugnissen auf Fleischgrundlage.

8. Verfahren zur Herstellung von Öl enthaltenden Erzeugnissen auf Fleischgrundlage unter Verwendung einer Ölzusammensetzung nach einem der Ansprüche 1 bis 4.

9. Verfahren nach Anspruch 8, wobei die Erzeugnisse auf Fleischgrundlage ausgewählt sind aus der Gruppe bestehend aus gekochten Würsten, fermentierten trockenen oder halbgetrockneten Würsten, gekochten und trockenen (fermentierten) und frischen (rohen) Erzeugnissen auf Grundlage von ganzem Muskelgewebe, Gebäckstücken, Pastete, frischen (rohen) Würsten und grob zerkleinerten (oder zerhackten) Erzeugnissen auf Fleischgrundlage.

10. Verfahren nach Anspruch 9, wobei die Erzeugnisse auf Fleischgrundlage gekochte Würste sind und das Verfahren die Schritte umfasst:
(a) Bereitstellen einer fein zerkleinerten Fleischpaste, umfassend Fleisch, die Ölzusammensetzung gemäß einem der Ansprüche 1 bis 4 und zusätzliche Bestandteile,
(b) Füllen der fein zerkleinerten Fleischpaste in Füllmaterialien,
(c) die eingefüllte Fleischpaste einer Wärmebehandlung Unterwerfen, und
(d) Abkühlen und Abpacken der Enderzeugnisse.

11. Verfahren nach Anspruch 9, wobei die Erzeugnisse auf Fleischgrundlage fermentierte trockene oder halb getrocknete Würste sind und das Verfahren die Schritte umfasst:
(a) Injizieren der Ölzusammensetzung gemäß einem der Ansprüche 1 bis 4 in Fleischstücke,
(b) Bereitstellen einer Grundfleischmasse, umfassend Fleisch, die injizierten Fleischstücke und zusätzliche Bestandteile,
(c) Füllen der Grundfleischmasse in Füllmaterialien,
(d) Reifen der eingefüllten Fleischmasse, und
(e) Abpacken der Enderzeugnisse.

12. Verfahren nach Anspruch 9, wobei die Erzeugnisse auf Fleischgrundlage gekochte Erzeugnisse auf Grundlage von ganzem Muskelgewebe sind und das Verfahren die Schritte umfasst:
(a) Injizieren der Ölzusammensetzung gemäß einem der Ansprüche 1 bis 4 und zusätzlicher Bestandteile in ganzes Muskelgewebe,
(b) das injizierte ganze Muskelgewebe einem Massierschritt Unterwerfen,
(c) Füllen des ganzen Muskelgewebes von Schritt (b) in Füllmaterialien,
(d) das eingefüllte ganze Muskelgewebe einer Wärmebehandlung Unterwerfen, und
(e) Abkühlen und Abpacken der Enderzeugnisse.

13. Verfahren nach Anspruch 9, wobei die Erzeugnisse auf Fleischgrundlage trockene (fermentierte) Erzeugnisse auf Grundlage von ganzem Muskelgewebe sind und das Verfahren die Schritte umfasst:
(a) Injizieren der Ölzusammensetzung gemäß einem der Ansprüche 1 bis 4 in ganzes Muskelgewebe,
(b) Weiterverarbeiten des injizierten ganzen Muskelgewebes zu den Enderzeugnissen.

14. Verfahren nach Anspruch 9, wobei die Erzeugnisse auf Fleischgrundlage frische (rohe) Würste sind und das Verfahren die Schritte umfasst:
(a) Bereitstellen einer feinen und/oder groben Fleischpaste, umfassend Fleisch, eine Ölzusammensetzung gemäß einem der Ansprüche 1 bis 4 und zusätzliche Bestandteile,
(b) Füllen der Fleischpaste in Füllmaterialien, und
(c) Abkühlen oder Gefrieren und Abpacken der Enderzeugnisse.

15. Verfahren nach Anspruch 9, wobei die Erzeugnisse auf Fleischgrundlage grob zerkleinerte (oder zerhackte) Erzeugnisse auf Fleischgrundlage sind und das Verfahren die Schritte umfasst:
(a) Bereitstellen einer grob zerkleinerten Fleischmasse, umfassend Fleisch, eine Ölzusammensetzung gemäß einem der Ansprüche 1 bis 4 und zusätzliche Bestandteile,
(b) Bilden der grob zerkleinerten Fleischmasse, und
(c.1) Abkühlen oder Gefrieren und Abpacken der Enderzeugnisse, oder
(c.2) Kochen, Abkühlen oder Gefrieren und Abpacken der Enderzeugnisse.

16. Öl enthaltendes Erzeugnis auf Fleischgrundlage, erhältlich gemäß einem Verfahren nach einem der Ansprüche 8 bis 15.

17. Verwendung einer Ölzusammensetzung gemäß einem der Ansprüche 1 bis 4 zur Herstellung von Öl enthaltenden Nahrungsmittelerzeugnissen vom Emulsionstyp, vorzugsweise ausgewählt aus Erzeugnissen vom Mayonnaise-Typ und Salatdressings.

## Revendications

1. Composition d'huile, comprenant une huile et un bouillon, **caractérisée en ce que** le rapport de l'huile au bouillon est compris dans la plage de 1:1 à 1:3.

2. Composition d'huile selon la revendication 1, dans laquelle l'huile est une huile végétale choisie dans le groupe consistant en huile d'olive, l'huile de palme, l'huile de soja, l'huile de canola, l'huile de graine de potiron, l'huile de maïs, l'huile de colza, l'huile de tournesol, l'huile de carthame, l'huile d'arachide, l'huile de noix, l'huile de germe de blé, l'huile de pépin de raisin, l'huile de sésame, l'huile d'argan, l'huile de son de riz et les mélanges de celles-ci.

3. Composition d'huile selon la revendication 1 ou 2, dans laquelle le bouillon est choisi dans le groupe consistant en le bouillon de boeuf, le bouillon de porc, le bouillon de poulet, le bouillon de veau, le bouillon d'agneau, le bouillon de canard, le bouillon d'oie ou un bouillon constitué d'autres espèces comestibles convenant à la consommation humaine, le bouillon de légume et les mélanges de ceux-ci.

4. Composition d'huile selon l'une quelconque des revendications 1 à 3, dans laquelle la teneur en matières grasses du bouillon est inférieure ou égale à 5 % en poids.

5. Procédé de préparation d'une composition d'huile selon l'une quelconque des revendications 1 à 4, comprenant les étapes de :
(a) mise à disposition d'une huile,
(b) mise à disposition d'un bouillon,
(c) mélange de l'huile et du bouillon selon un rapport de 1:1 à 1:3.

6. Utilisation d'une composition d'huile selon l'une quelconque des revendications 1 à 4 pour la préparation de produits à base de viande contenant de l'huile.

7. Utilisation selon la revendication 6, pour laquelle les produits à base de viande sont choisis dans le groupe consistant en les saucissons cuits, les saucissons fermentés secs ou semi-secs, les produits à base de tissus musculaires entiers cuits et secs (fermentés) et frais (crus), les pâtisseries, les pâtés, les saucissons frais (crus) et les produits à base de viandes hachées grossier (ou hachés fin).

8. Procédé de préparation de produits à base de viandes contenant de l'huile, par utilisation d'une composition d'huile selon l'une quelconque des revendications 1 à 4.

9. Procédé selon la revendication 8, dans lequel les produits à base de viande sont choisis dans le groupe consistant en les saucissons cuits, les saucissons fermentés secs ou semi-secs, les produits à base de tissus musculaires entiers cuits et secs (fermentés) et frais (crus), les pâtisseries, les pâtés, les saucissons frais (crus) et les produits à base de viandes hachées grossier (ou hachés fin).

10. Procédé selon la revendication 9, dans lequel les produits à base de viandes sont des saucissons cuits, et le procédé comprend les étapes de :
(a) mise à disposition d'un pâté de viande haché fin, comprenant de la viande, la composition d'huile selon l'une quelconque des revendications 1 à 4, et des ingrédients additionnels,
(b) introduction, dans des matières de farcissage, du pâté de viande haché fin,
(c) soumission du pâté de viande farci à un traitement thermique, et
(d) réfrigération et le conditionnement des produits finis.

11. Procédé selon la revendication 9, dans lequel les produits à base de viandes sont des saucissons fermentés, secs ou semi-secs, et le procédé comprend les étapes de :
(a) injection, dans des morceaux de viande, de la composition d'huile selon l'une quelconque des revendications 1 à 4,
(b) mise à disposition d'une masse de viande hachée, comprenant la viande, les morceaux de viande ayant reçu l'injection, et les ingrédients additionnels,
(c) introduction, dans des matières de farcissage, de la masse de viande hachée,
(d) affinage de la masse de viande farcie, et
(e) conditionnement des produits finis.

12. Procédé selon la revendication 9, dans lequel les produits à base de viande sont des produits cuits à base de tissus musculaires entiers, et le procédé comprend les étapes de :
(a) injection, dans le tissu musculaire entier, de la composition d'huile selon l'une quelconque des revendications 1 à 4, et d'ingrédients additionnels,
(b) soumission du tissu musculaire entier ayant reçu l'injection à une étape de massage,
(c) introduction, dans des matières de farcissage, du tissu musculaire entier de l'étape (b),
(d) soumission du tissu musculaire entier farci à un traitement thermique, et
(e) réfrigération et le conditionnement des produits finis.

13. Procédé selon la revendication 9, dans lequel les produits à base de viande sont des produits secs (fermentés) à base de tissu musculaire entier, et le procédé comprend les étapes de :
(a) injection, dans le tissu musculaire entier, de la composition d'huile selon l'une quelconque des revendications 1 à 4,
(b) la transformation plus poussée du tissu musculaire entier ayant reçu l'injection en les produits finis.

14. Procédé selon la revendication 9, dans lequel les produits à base de viande sont des saucissons frais (crus), et le procédé comprend les étapes de :
(a) mise à disposition d'un pâté de viande haché fin et/ou grossier, comprenant de la viande, une composition d'huile selon l'une quelconque des revendications 1 à 4 et des ingrédients additionnels,
(b) introduction du pâté de viande dans des matières de farcissage, et
(c) réfrigération ou la congélation et le conditionnement des produits finis.

15. Procédé selon la revendication 9, dans lequel les produits à base de viande sont des produits à base de viande hachés grossier (ou hachés fin), et le procédé comprend les étapes de :
(a) mise à disposition d'une masse de viande hachée grossier, comprenant de la viande, une composition d'huile selon l'une quelconque des revendications 1 à 4 et des ingrédients additionnels,
(b) formation d'une masse de viande hachée grossier, et
(c.1) réfrigération ou congélation et le conditionnement des produits finis, ou
(c.2) cuisson, réfrigération ou congélation et conditionnement des produits finis.

16. Produit à base de viande contenant une huile, pouvant être obtenu par un procédé selon l'une quelconque des revendications 8 à 15.

17. Utilisation d'une composition d'huile selon l'une quelconque des revendications 1 à 4 pour la préparation de produits alimentaires de type émulsion contenant une huile, choisis de préférence parmi les produits de type mayonnaise et les sauces pour salade.
